# EUROPEAN PATENT APPLICATION

(11) **EP 4 737 880 A1**
(43) Date of publication of application: **06.05.2026**
(21) Application number: 24860492.8
(22) Date of filing: 02.09.2024
(51) Int. Cl.: G01N 3/303, G01N 3/06, G06N 3/09, G06N 20/00

(54) **APPARATUS AND METHOD FOR DESIGNING MULTILAYER FILM**

(30) Priority: 01.09.2023 KR 20230116487; 30.08.2024 KR 20240117595
(71) Applicant: LG Chem, Ltd., Seoul 07336 (KR)
(72) Inventor: IM, Damhyeok, Daejeon 34122 (KR); JO, Seongin, Daejeon 34122 (KR); JUNG, Jinmi, Daejeon 34122 (KR); MOON, Sung Nam, Daejeon 34122 (KR); HWANG, Seokyung, Daejeon 34122 (KR); SEO, Minji, Daejeon 34122 (KR); JEON, Yeojin, Daejeon 34122 (KR)
(74) Representative: Hoffmann Eitle
(86) International application number: PCT/KR2024/013156
(87) International publication number: WO 2025/048576

(57) **Abstract**

Disclosed are a design apparatus and method for a multilayer film. The design apparatus for a multilayer film may model the laminated structure of the multilayer film to be designed, collect dart impact strength data for the single layer film forming the laminated structure as stress-strain data, read a value stored in advance in a storage space accessible to the design apparatus for the multilayer film, acquire a feature setting mode for designating different feature setting methods according to the read value, set a plurality of physical indicators selected from the dart impact strength data and the thickness of the single layer film as the features according to the feature setting mode, predict the dart impact strength of the multilayer film by using a machine learning model trained from a plurality of supervised learning models using features as an independent variable and the dart impact strength of the multilayer film as a target variable, and generate design data for the multilayer film by combining the predicted values for other characteristics and the predicted values of the dart impact strength.

## Description

### [Technical Field]

### CROSS-REFERENCE TO RELATED APPLICATION

This application claims priority to and the benefit of Korean Patent Application Nos. 10-2023-0116487 and 10-2024-0117595 filed in the Korean Intellectual Property Office on September 01, 2023 and August 30, 2024, the entire contents of which are incorporated herein by reference.

The present disclosure relates to a design apparatus and method for a multilayer film.

### [Background Art]

Polymer films refer to a thin, flat structure manufactured from polymer materials. Here, polymer may have a molecular structure in the form of a long chain in which monomers, which are repeating units, are connected. A thickness of the polymer film may be set variously up to millimeters (mm). The polymer films may have various advantages, including flexibility, lightness, cost efficiency, and processability. Specifically, the polymer films may be manufactured in various shapes and sizes due to their excellent flexibility, so the polymer films may be applied to various product designs. In addition, due to the lightness of the polymer film, the polymer films may be suitable for products that require portability and reduce transportation and handling costs. In addition, the polymer films may be manufactured with relatively inexpensive raw materials and mass-produced, so the polymer film is cost-effective. In addition, the polymer films may be applied to various manufacturing and processing technologies, such as thermal processing, extrusion, and bonding, so the shape, size, and thickness of the product may be easily adjusted. In addition, the polymer films have high durability and strength, and some polymer films have excellent optical properties, excellent waterproofing, and may be breathable as needed.

A multilayer film may be a film composed of two or more layers of polymers or other materials. This multilayer structure may improve the performance of the entire film by combining unique properties of each layer. For example, one layer may be used to increase durability and strength, another layer may provide waterproofing or moisture resistance, and another layer may provide resistance to a specific chemical. In this way, by combining layers with various characteristics, the multilayer film may adapt to a wider range of applications and specific requirements than a single layer film.

### [Disclosure]

### [Technical Problem]

The present disclosure attempts to provide a design apparatus and method for a multilayer film capable of predicting properties of a multilayer film using only information on a single layer film that forms a multilayer film when designing the multilayer film.

### [Technical Solution]

According to an example embodiment, there is provided a design apparatus for a multilayer film that designs the multilayer film based on properties of the multilayer film predicted only using information about a single layer film by executing a program code loaded into one or more memory devices through one or more processors, in which the program code may be executed to: model the laminated structure of the multilayer film to be designed, collect dart impact strength data for the single layer film forming the laminated structure as stress-strain data; read a value stored in advance in a storage space accessible to the design apparatus for the multilayer film, and acquire a feature setting mode for designating different feature setting methods according to the read value; set a plurality of physical indicators selected from the dart impact strength data and a thickness of the single layer film as a feature, according to the feature setting mode; select at least one of a plurality of supervised learning models capable of regression analysis as a machine learning model; predict the dart impact strength of the multilayer film using the machine learning model trained using the features as an independent variable and the dart impact strength of the multilayer film as a target variable; and generate design data for the multilayer film by combining predicted values for other characteristics and predicted values of the dart impact strength to satisfy design requirements of the multilayer film.

In some example embodiments, when the feature setting mode includes a first feature setting mode, the setting as the feature may include setting, as the feature, at least some of a yield point, yield stress, resilience, strain hardening, failure, strain hardening modulus, flow energy, strain hardening energy, toughness, 1% modulus, and 2% modulus, and a thickness of the single layer film.

In some example embodiments, the selecting as the machine learning model may include selecting one of a partial least squares (PLS) model, a Lasso regression model, and a random forest model as the machine learning model, and the machine learning model selected from among the PLS model, the Lasso regression model, and the random forest model may receive a vector generated from at least some of the yield point, the yield stress, the resilience, the strain hardening, the failure, the strain hardening modulus, the flow energy, the strain hardening energy, the toughness, the 1% modulus, and the 2% modulus, and the thickness of the single layer film, and may be trained to predict the dart impact strength of the multilayer film.

In some example embodiments, when the feature setting mode includes a second feature setting mode, the setting as the feature may include setting, as the feature, at least some of yield stress, yield strain, necking stress, necking strain, breaking stress, and breaking strain, and the thickness of the single layer film.

In some example embodiments, the selecting as the machine learning model may include selecting one of a PLS model, a Lasso regression model, and a random forest model as the machine learning model, and the machine learning model selected from among the PLS model, the Lasso regression model, and the random forest model may receive a vector generated from at least some of the yield stress, the yield strain, the necking stress, the necking strain, the breaking stress, and the breaking strain, and the thickness of the single layer film, and may be trained to predict the dart impact strength of the multilayer film.

In some example embodiments, when the feature setting mode includes a third feature setting mode, the setting as the feature may include setting, as the feature, indicators of yield stress, yield strain, and the yield stress being divided by the yield strain, and the thickness of the single layer film.

In some example embodiments, the selecting as the machine learning model may include selecting one of a PLS model, a Lasso regression model, and a random forest model as the machine learning model, and the machine learning model selected from among the PLS model, the Lasso regression model, and the random forest model may receive a vector generated from the indicators of the yield stress, the yield strain, and the yield stress being divided by the yield strain, and the thickness of the single layer film, and may be trained to predict the dart impact strength of the multilayer film.

In some example embodiments, the generating of the design data for the multilayer film may include combining predicted values for at least one of stiffness, strength, strain, tear strength, high-speed dart impact strength, sealing initiation temperature (SIT), haze, moisture permeability, and air permeability of the multilayer film with the predicted values of the dart impact strength, when the multilayer film designed based on the combination of the predicted values satisfies the design requirements, generating the design data based on the combination, and when the multilayer film designed based on the combination of the predicted values does not satisfy the design requirements, changing the combination to another combination and redesigning the multilayer film.

In some example embodiments, the multilayer film may be modeled as a multilayer film model, the multilayer film may include a first single layer film and a second single layer film that are laminated to each other, the multilayer film model may include n (n is a multiple of 6) model layers that are laminated to each other, and the first single layer film corresponds to two or more model layers among the model layers, and the second single layer film corresponds to two or more other model layers among the model layers.

In some example embodiments, the program code may be executed to additionally display the model layer on a display device, and provide a user interface that allows a user to set the model layer corresponding to the first single layer film and the model layer corresponding to the second single layer film.

A design method for a multilayer film that designs the multilayer film based on properties of the multilayer film predicted only using information about a single layer film performed by a computing device including one or more processors and one or more memory devices may include: modeling the laminated structure of the multilayer film to be designed; collecting dart impact strength data for the single layer film forming the laminated structure as stress-strain data; reading a value stored in advance in a storage space accessible by the computing device and acquiring a feature setting mode for designating a different feature setting method according to the read value; setting a plurality of physical indicators selected from the dart impact strength data and a thickness of the single layer film as a feature, according to the feature setting mode; selecting at least one of a plurality of supervised learning models capable of regression analysis as a machine learning model; predicting the dart impact strength of the multilayer film using the machine learning model trained using the feature as an independent variable and the dart impact strength of the multilayer film as a target variable; and generating design data for the multilayer film by combining predicted values for other characteristics and predicted values of the dart impact strength to satisfy design requirements of the multilayer film.

In some example embodiments, when the feature setting mode may include a first feature setting mode, the setting as the feature may include setting, as the feature, at least some of a yield point, yield stress, resilience, strain hardening, failure, strain hardening modulus, flow energy, strain hardening energy, toughness, 1% modulus, and 2% modulus, and a thickness of the single layer film.

In some example embodiments, the selecting as the machine learning model may include selecting one of a PLS model, a Lasso regression model, and a random forest model as the machine learning model, and the machine learning model selected from among the PLS model, the Lasso regression model, and the random forest model may receive a vector generated from at least some of the yield point, the yield stress, the resilience, the strain hardening, the failure, the strain hardening modulus, the flow energy, the strain hardening energy, the toughness, the 1% modulus, and the 2% modulus, and the thickness of the single layer film, and may be trained to predict the dart impact strength of the multilayer film.

In some example embodiments, when the feature setting mode includes a second feature setting mode, the setting as the feature may include setting, as the feature, at least some of yield stress, yield strain, necking stress, necking strain, breaking stress, and breaking strain, and the thickness of the single layer film.

In some example embodiments, the selecting as the machine learning model may include selecting one of a PLS model, a Lasso regression model, and a random forest model as the machine learning model, and the machine learning model selected from among the PLS model, the Lasso regression model, and the random forest model may receive a vector generated from at least some of the yield stress, the yield strain, the necking stress, the necking strain, the breaking stress, and the breaking strain, and the thickness of the single layer film, and may be trained to predict the dart impact strength of the multilayer film.

In some example embodiments, when the feature setting mode includes a third feature setting mode, the setting as the feature may include setting, as the feature, yield stress, yield strain, and the yield stress being divided by the yield strain, and the thickness of the single layer film.

In some example embodiments, the selecting as the machine learning model may include selecting one of a PLS model, a Lasso regression model, and a random forest model as the machine learning model, and the machine learning model selected from among the PLS model, the Lasso regression model, and the random forest model may receive a vector generated from the indicators of the yield stress, the yield strain, and the yield stress being divided by the yield strain, and the thickness of the single layer film, and may be trained to predict the dart impact strength of the multilayer film.

In some example embodiments, the generating of the design data for the multilayer film may include: combining predicted values for at least one of stiffness, strength, strain, tear strength, high-speed dart impact strength, sealing initiation temperature (SIT), haze, moisture permeability, and air permeability of the multilayer film with the predicted values of the dart impact strength; when the multilayer film designed based on the combination of the predicted values satisfies the design requirements, generating the design data based on the combination; and when the multilayer film designed based on the combination of the predicted values does not satisfy the design requirements, changing the combination to another combination and redesigning the multilayer film.

In some example embodiments, the multilayer film may be modeled as a multilayer film model, the multilayer film may include a first single layer film and a second single layer film that are laminated to each other, the multilayer film model may include n (n is a multiple of 6) model layers that are laminated to each other, and the first single layer film corresponds to two or more model layers among the model layers, and the second single layer film corresponds to two or more other model layers among the model layers.

In some example embodiments, the design method may further include: displaying the model layer on a display device, and providing a user interface that allows a user to set the model layer corresponding to the first single layer film and the model layer corresponding to the second single layer film.

### [Advantageous Effects]

According to embodiments, when designing a multilayer film, the properties of the multilayer film may be predicted using only information about a single layer film constituting the multilayer film, and the prediction results regarding other characteristics may be considered together to design the multilayer film that may satisfy the given design requirements.

### [Description of the Drawings]

FIG. 1 is a block diagram illustrating a design apparatus for a multilayer film according to an example embodiment.
FIG. 2 is a diagram illustrating stress-strain data for a single layer film according to an example embodiment.
FIG. 3 is a flowchart illustrating a design method for a multilayer film according to an example embodiment.
FIG. 4 is a block diagram illustrating the design apparatus for a multilayer film according to an example embodiment.
FIG. 5 is a block diagram illustrating the design apparatus for a multilayer film according to an example embodiment.
FIGS. 6 and 7 are diagrams illustrating a user interface according to an example embodiment.
FIG. 8 is a diagram for describing a computing device according to an example embodiment.

### [Mode for Invention]

Hereinafter, example embodiments of the present disclosure will be described more fully with reference to the accompanying drawings so as to be easily practiced by those skilled in the art to which the present disclosurepertains. As those skilled in the art would realize, the described embodiments may be modified in various different ways, all without departing from the spirit or scope of the present disclosure. Accordingly, the drawings and description are to be regarded as illustrative in nature and not restrictive. Like reference numerals designate like elements throughout the specification.

Throughout the specification and claims, unless explicitly described to the contrary, the word "comprise" and variations such as "comprises" or "comprising", will be understood to imply the inclusion of stated elements but not the exclusion of any other elements. Terms including an ordinal number such as first, second, etc., may be used to describe various components, but the components are not limited to these terms. The above terms are used solely for the purpose of distinguishing one component from another.

Terms such as "... unit", "... er/or", and "module" used in the specification may mean a unit capable of processing at least one function or operation described in the specification, which may be implemented as hardware or a circuit, software, or a combination of hardware or circuit and software. In addition, at least some components or functions of a design apparatus and method for a multilayer film according to the example embodiments to be described below may be implemented as a program or software, and the program or software may be stored on a computer-readable medium.

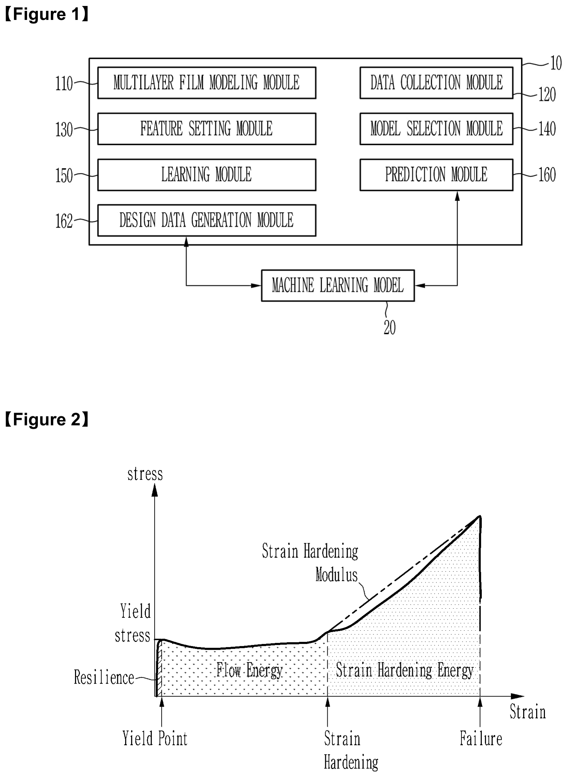

FIG. 1 is a block diagram illustrating a design apparatus for a multilayer film according to an example embodiment. FIG. 2 is a diagram illustrating stress-strain data for a single layer film according to an example embodiment.

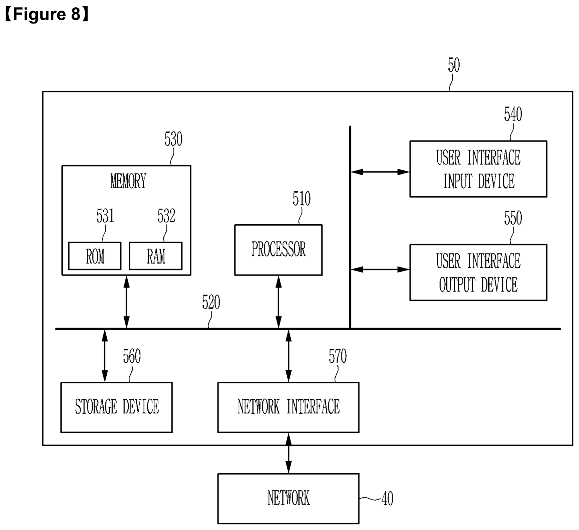

Referring to FIG. 1, a design apparatus 10 for a multilayer film according to an example embodiment may execute program codes or instructions loaded into one or more memory devices through one or more processors. For example, the design apparatus 10 for a multilayer film may be implemented as a computing device 50 as described below with respect to FIG. 8. In this case, one or more processors may correspond to a processor 510 of a computing device 50, and one or more memory devices may correspond to a memory 530 of the computing device 50. The program codes or instructions, executed by one or more processors, may predict properties of a multilayer material, i.e., a multilayer film, using only information about a single layer film, and design the multilayer film based on the predicted properties. In this specification, the term "module" is used to logically separate these functions performed by the program codes or instructions.

The design apparatus 10 for a multilayer film may include all or at least a portion of a multilayer film modeling module 110, a data collection module 120, a feature setting module 130, a model selection module 140, a learning module 150, a prediction module 160, and a design data generation module 162. For example, the learning module 150 may be implemented within the design apparatus 10 for a multilayer film. In contrast, for example, the learning module 150 may be implemented outside of the design apparatus 10 for a multilayer film, and the design apparatus 10 for a multilayer film may be provided with a machine learning model trained by the learning module 150.

The multilayer film modeling module 110 may model a laminated structure of the multilayer film to be designed. The multilayer film may include a plurality of single layer films. Here, the plurality of single layer films may include a certain type of single layer film and a different type of single layer film, and unique properties of the single layer film may differ depending on the type. In addition, a laminating order of the single layer films within the multilayer film may also vary. The multilayer film modeling module 110 may model the multilayer film by setting the type of the single layer film, the laminating order of the single layer film, etc., for the multilayer film whose properties are to be predicted.

In some example embodiments, the multilayer film modeling module 110 may model a multilayer film including k single layer films (where k is an integer greater than or equal to 2). For example, the multilayer film modeling module 110 may model a multilayer film in which a first film layer, a second film layer, ..., a k-th film layer are sequentially laminated from the bottom. For each of the k single layer films forming the multilayer film, features set by the feature setting module 130 described below may be applied.

In some example embodiments, the multilayer film modeling module 110 may model a multilayer film including 6 single layer films. For example, the multilayer film modeling module 110 may model a multilayer film in which the first film layer, the second film layer, the third film layer, the fourth film layer, the fifth film layer, and the sixth film layer are sequentially laminated from the bottom.

The data collection module 120 may collect dart impact strength data for a single layer film forming a laminated structure modeled by the multilayer film modeling module 110. Here, the dart impact strength may mean the strength that a material (here, the single layer film) may withstand when subjected to a physical impact. The dart impact strength may be used as an indicator for measuring, for example, how much the single layer film is damaged when a weight is dropped from a predetermined height. The design apparatus 10 for a multilayer film may predict the dart impact strength of the multilayer film through the machine learning based on the dart impact strength data for each of a plurality of single layer films forming the laminated structure.

In some example embodiments, the data collection module 120 may collect the dart impact strength data for the single layer film as the stress-strain data. Referring to FIG. 2 together, the stress-strain data may represent mechanical properties of the single layer film, and may be expressed in the form of a stress-strain curve. The stress-strain curve may represent stress that occurs when a force is applied to the single layer film, and how the single layer film is deformed as a result.

In some example embodiments, the stress-strain data may include at least one of a yield point, yield stress, resilience, strain hardening, failure, strain hardening modulus, flow energy, strain hardening energy, toughness, 1% modulus, and 2% modulus. Here, the yield point refers to a point where the material moves from an elastic deformation region to an inelastic deformation region, and after the yield point, the material may not completely return to its original shape even if the stress applied to the material is removed. The yield stress is a stress value at the yield point, and a higher value may mean that the material may withstand a greater stress before being deformed. The resilience is the area under the stress-strain curve up to the yield point, and may be a measure of how well the material may return to its original shape when the stress is removed after being deformed under a certain stress. The strain hardening refers to the phenomenon in which the material is strengthened as the strain increases to withstand additional stress after the yield point, and the failure may refer to the point at which the material may no longer withstand the stress and is destroyed. The strain hardening modulus is expressed as a slope of the stress-strain curve in the strain hardening section, and may be used as an indicator of how quickly the material is strengthened. The flow energy may be the area under the stress-strain curve from the yield point to strain hardening, and the strain hardening energy may be the area under the stress-strain curve from strain hardening up to failure. The toughness is the total area under the stress-strain curve, which indicates how much energy the material may absorb, and the 1% modulus and 2% modulus may indicate the stress at 1% and 2% strain, respectively. The values of the 1% modulus and 2% modulus may be used as measurements indicating the strength within a range that does not exceed the elastic range of the material.

In some example embodiments, the data collection module 120 may collect the dart impact strength data for the single layer film by testing according to "Method A" of ASTM D1709. Here, the test may be to evaluate the impact strength, the toughness, etc., of the single layer film using a freely falling dart. For more detailed information related to ASTM D1709, reference may be made to the ASTM standard document, and thus description thereof will be omitted in this specification.

In some example embodiments, the data collection module 120 may acquire the stress-strain curve as data based on the results of a uniaxial tensile test performed in a machine direction (MD) and a transverse direction (TD). Here, the MD may be a direction in which the film moves between rollers of a manufacturing machine in the film manufacturing process, and the TD may be perpendicular to the MD, i.e., a direction orthogonal to the rollers of the manufacturing machine. Meanwhile, the uniaxial tensile test may be performed in a manner of measuring the resistance when the single layer film is stretched in the uniaxial direction. In this case, the data collection module 120 may collect data regarding the stress-strain curve through the test according to ASTM D882. For more detailed information related to ASTM D882, reference may be made to the ASTM standard document, and thus description thereof will be omitted in this specification.

The feature setting module 130 may perform feature setting according to a plurality of feature setting modes. The plurality of feature setting modes are stored and managed as predetermined values in a storage space accessible by the processor of the design apparatus 10 for a multilayer film, and the design apparatus 10 for a multilayer film may read the values stored in advance in the storage space and determine a feature setting mode for designating a different feature setting method according to the read values.

In some example embodiments, when the feature setting mode is a first feature setting mode, the feature setting module 130 may set a plurality of physical indicators selected from the dart impact strength data for the single layer film and the thickness of the single layer film as the features. In the machine learning, the feature is an input variable used to predict a target to be predicted, that is, the property of the multilayer film, and may mean individual independent variables of data. The features may provide information related to the dependent variable or target variable to be predicted within the dataset, and have a significant impact on the performance of the machine learning model 20. The learning module 150 may use features to perform the training of the machine learning model 20. In this case, the features constitute a portion of the data input to the machine learning model 20, and the machine learning model 20 may train patterns based on the data and perform predictions. In particular, feature engineering, which selects or transforms features, may be an important process for improving the performance of the machine learning model 20. In other words, selecting appropriate features or appropriately transforming features may have a significant impact on the high performance of the machine learning model 20.

In some example embodiments, the feature setting module 130 may set some of the yield point, the yield stress, the resilience, the strain hardening, the failure, the strain hardening modulus, the flow energy, the strain hardening energy, the toughness, the 1% modulus, and the 2% modulus, and the thickness of the single layer film as the features. That is, the feature setting module 130 may set, as the features, only some of the stress-strain data that are collected by the data collection module 120 and the thickness of the single layer film. When the multilayer film including k single layer films is modeled by the multilayer film modeling module 110, the learning module 150 may apply the features including only some of the stress-strain data that are collected by the data collection module 120 and the thickness of the single layer film to the first film layer among the k single layer films. In addition, the learning module 150 may apply the features including only selected some of the stress-strain data that are collected by the data collection module 120 and the thickness of the single layer film to the second film layer among the k single layer films. In addition, the learning module 150 may apply the features including only some of the stress-strain data that are collected by the data collection module 120 and the thickness of the single layer film to the k-th film layer to perform the training of the machine learning model 20. In this case, the training may be performed by applying the same type of feature to all of the k single layer films, or on the contrary, the training may be performed by applying a different type of feature to one film layer among the k single layer films from the other film layers. The present example embodiment may be adopted in an environment where computing resources for performing training and prediction for the machine learning model 20 are limited.

In some example embodiments, the feature setting module 130 may set all of the yield point, the yield stress, the resilience, the strain hardening, the failure, the strain hardening modulus, the flow energy, the strain hardening energy, the toughness, the 1% modulus, and the 2% modulus, and the thickness of the single layer film as the features. That is, the feature setting module 130 may set, as the features, all of the stress-strain data that are collected by the data collection module 120 and the thickness of the single layer film. When the multilayer film including k single layer films is modeled by the multilayer film modeling module 110, the learning module 150 may apply the features including all of the stress-strain data that are collected by the data collection module 120 and the thickness of the single layer film to the first film layer among the k single layer films. In addition, the learning module 150 may apply the features including all of the stress-strain data that are collected by the data collection module 120 and the thickness of the single layer film to the second film layer among the k single layer films. In addition, the learning module 150 may apply the features including all of the stress-strain data that are collected by the data collection module 120 and the thickness of the single layer film to the k-th film layer to perform the training the machine learning model 20. The present example embodiment may be adopted in an environment where the computing resources for performing training and prediction for the machine learning model 20 are sufficient.

In some example embodiments, the stress-strain data may include first stress-strain data and second stress-strain data. The first stress-strain data may represent mechanical properties of the single layer film in a first direction, and the second stress-strain data may represent mechanical properties of the single layer film in a second direction perpendicular to the first direction. Specifically, the first direction may be the MD and the second direction may be the TD. The feature setting module 130 may set a plurality of physical indicators selected from at least one of the first stress-strain data and the second stress-strain data as the features.

In some example embodiments, the feature setting module 130 may set some of the yield point, the yield stress, the resilience, the strain hardening, the failure, the strain hardening modulus, the flow energy, the strain hardening energy, the toughness, the 1% modulus, and the 2% modulus in the first direction, and some of the yield point, the yield stress, the resilience, the strain hardening, the failure, the strain hardening modulus, the flow energy, the strain hardening energy, the toughness, the 1% modulus, and the 2% modulus in the second direction, and the thickness of the single layer film as the features. That is, the feature setting module 130 may set, as the features, only selected some of the first stress-strain data and only selected some of the second stress-strain data that are collected by the data collection module 120, and the thickness of the single layer film. When the multilayer film including k single layer films is modeled by the multilayer film modeling module 110, the learning module 150 may apply, as the features, only selected some of the first stress-strain data and only selected some of the second stress-strain data that are collected by the data collection module 120, and the thickness of the single layer film to the first film layer among the k single layer films. In addition, the learning module 150 may apply the features including only selected some of the first stress-strain data and only selected some of the second stress-strain data that are collected by the data collection module 120, and the thickness of the single layer film to the second film layer among the k single layer films. In addition, the learning module 150 may apply the features including only selected some of the first stress-strain data and only selected some of the second stress-strain data that are collected by the data collection module 120, and the thickness of the single layer film to the k-th film layer to perform the training of the machine learning model 20.

In some example embodiments, the feature setting module 130 may set all of the yield point, the yield stress, the resilience, the strain hardening, the failure, the strain hardening modulus, the flow energy, the strain hardening energy, the toughness, the 1% modulus, and the 2% modulus in the first direction, and all of the yield point, the yield stress, the resilience, the strain hardening, the failure, the strain hardening modulus, the flow energy, the strain hardening energy, the toughness, the 1% modulus, and the 2% modulus in the second direction, and the thickness of the single layer film as the features. That is, the feature setting module 130 may set, as the features, all of the first stress-strain data and all of the second stress-strain data that are collected by the data collection module 120, and the thickness of the single layer film. When the multilayer film including k single layer films is modeled by the multilayer film modeling module 110, the learning module 150 may apply, as the features, all of the first stress-strain data and all of the second stress-strain data that are collected by the data collection module 120, and the thickness of the single layer film to the first film layer among the k single layer films. In addition, the learning module 150 may apply the features including all of the first stress-strain data and all of the second stress-strain data that are collected by the data collection module 120, and the thickness of the single layer film to the second film layer among the k single layer films. In addition, the learning module 150 may apply the features including all of the first stress-strain data and all of the second stress-strain data that are collected by the data collection module 120, and the thickness of the single layer film to the k-th film layer to perform the training of the machine learning model 20.

In some other example embodiments, when the feature setting mode is the second feature setting mode, the feature setting module 130 may set the yield stress, the yield strain, the necking stress, the necking strain, the breaking stress, and the breaking strain as the features. Here, the yield stress, the yield strain, the necking strain, and the breaking stress may be the features corresponding to the yield stress, yield point, the strain hardening, and the failure of the stress-strain data described above. Meanwhile, the necking stress and the breaking strain may be newly specified features analyzed from the stress-strain data. Here, the yield stress may represent the stress at the yield point, which is the point where the material exceeds the elastic limit and permanent deformation begins, that is, the point where the material moves from the elastic deformation region to the inelastic deformation region, and the yield strain may represent the strain corresponding to the yield stress. The necking stress represents the stress at the point where the cross-section of the material begins to narrow locally (the necking point), and typically the load capacity of the material may be drastically reduced after the necking point. The necking strain may represent the strain at the necking point. The breaking stress may represent the stress at the point where the material finally breaks, and at the breaking point, the material may no longer support the load. The breaking strain may represent the strain corresponding to the breaking stress.

In some example embodiments, the feature setting module 130 may set at least some of the yield stress, the yield strain, the necking stress, neck strain, the breaking stress, and the breaking strain for each of the first direction and the second direction, and the thickness of the single layer film as the features. When the multilayer film including k single layer films is modeled by the multilayer film modeling module 110, the learning module 150 may apply, to the first film layer among the k single layer films, the features including at least selected some of the yield stress, the yield strain, the necking stress, the necking strain, the breaking stress, and the breaking strain in the first direction, at least selected some of the yield stress, the yield strain, the necking stress, the necking strain, the breaking stress, and the breaking strain in the second direction, and the thickness of the single layer film. In addition, the learning module 150 may apply, to the second film layer among the k single layer films, the features including at least selected some of the yield stress, the yield strain, the necking stress, the necking strain, the breaking stress, and the breaking strain in the first direction, at least selected some of the yield stress, the yield strain, the necking stress, the necking strain, the breaking stress, and the breaking strain in the second direction, and the thickness of the single layer film. In addition, the learning module 150 may apply, to the k-th film layer, the features including at least selected some of the yield stress, the yield strain, the necking stress, the necking strain, the breaking stress, and the breaking strain in the first direction, and at least some of the yield stress, the yield strain, the necking stress, the necking strain, the breaking stress, and the breaking strain in the second direction, and the thickness of the single layer film to perform the training of the machine learning model 20. In this case, the training may be performed by applying the same type of feature to all of the k single layer films, or on the contrary, the training may be performed by applying a different type of feature to one film layer among the k single layer films from the other film layers.

In some other example embodiments, when the feature setting mode is the third feature setting mode, the feature setting module 130 may set the indicators of the yield stress, the yield strain, and the yield stress being divided by the yield strain as the features. Specifically, the feature setting module 130 may set all the indicators of the yield stress, the yield strain, and the yield stress being divided by the yield strain for each of the first direction and the second direction, and the thickness of the single layer film as the features. When the multilayer film including k single layer films is modeled by the multilayer film modeling module 110, the learning module 150 may apply, to the first film layer among the k single layer films, the features including all the indicators of the yield stress, the yield strain, and the yield stress being divided by the yield strain in the first direction, all the indicators of the yield stress, the yield strain, and the yield stress being divided by the yield strain in the second direction, and the thickness of the single layer film. In addition, the learning module 150 may apply, to the second film layer among the k single layer films, the features including all the indicators of the yield stress, the yield strain, and the yield stress being divided by the yield strain in the first direction, all the indicators of the yield stress, the yield strain, and the yield stress being divided by the yield strain in the second direction, and the thickness of the single layer film. In addition, the learning module 150 may apply, to the k-th film layer, the features including all the indicators of the yield stress, the yield strain, and the yield stress being divided by the yield strain in the first direction, all the indicators of the yield stress, the yield strain, and the yield stress being divided by the yield strain in the second direction, and the thickness of the single layer film to perform the training of the machine learning model 20.

For example, when the multilayer film modeling module 110 models the multilayer film including six single layer films, seven features including all the indicators of the yield stress, the yield strain, and the yield stress being divided by the yield strain in the first direction, all the indicators of the yield stress, the yield strain, and the yield stress being divided by the yield strain in the second direction, and the thickness of the single layer film may be applied to one film layer, and since there are six layers in total, a total of 42 features may be applied.

The model selection module 140 may select the machine learning model to be used to predict the physical properties of the multilayer film, i.e., the dart impact strength. Specifically, the model selection module 140 may select at least one machine learning model from among a plurality of supervised learning models capable of regression analysis for predicting the dart impact strength of the multilayer film. The supervised learning is a method of training a model using labeled training data, and in the supervised learning, a model trains a relationship between input variables and a target variable, and may predict the value of the target variable for new input data through the relationship. In some example embodiments, the model selection module 140 may select a supervised learning model capable of regression analysis from among partial least squares (PLS), linear regression, polynomial regression, ridge regression, lasso regression, logistic regression, decision trees, random forests, gradient boosting, and neural networks. The PLS model may be used to model the relationship between the plurality of independent variables and the plurality of dependent variables (or target variables), and may find the independent variables that are determined to be important in predicting the dependent variables. In the linear regression, the model trains the linear relationship between the input variables and the target variable, and in the polynomial regression, the model may train complex relationships by extending the linear regression to include higher-order terms of the input variables. The ridge regression and the lasso regression may add regularization to the linear regression to prevent overfitting and adjust the complexity of the model, and the logistic regression is a classification algorithm for solving binary classification problems, but may be used in the regression analysis because it predicts the results as a probability. In the case of decision trees, random forests, and gradient boosting, complex nonlinear relationships are trained, and they may be used for regression problems as well as classification, and in the case of the neural networks, various types of regression problems may be solved, and in particular, the deep learning may be very effective for training the complex nonlinear relationships. Of course, the supervised learning models that may be selected by the model selection module 140 for the regression analysis are not limited to those listed above, and other types of models that are not listed may be selected considering specific implementation purposes, implementation environments, required performance, etc.

The learning module 150 may train the machine learning model 20 using the features set by the feature setting module 130 as the independent variables and the dart impact strength of the multilayer film as the target variable. Accordingly, the machine learning model 20 may be trained as the model that may predict the properties of the multilayer film for new data, that is, the property data for the single layer film, by training the relationship between the features and the target variables. In particular, the learning module 150 may use different learning methods depending on the model selected by the model selection module 140.

The prediction module 160 may predict the dart impact strength of the multilayer film using the machine learning model 20 trained by the learning module 150. That is, the prediction module 160 may transfer new data, that is, the property data for the single layer film, to the machine learning model 20 and acquire the prediction results for the dart impact strength of the multilayer film.

Specifically, the model selection module 140 may perform model selection according to the plurality of model selection modes. The plurality of model selection modes are stored and managed as predetermined values in a storage space accessible by a processor of the design apparatus 10 for a multilayer film, and the design apparatus 10 for a multilayer film may read the values stored in advance in the storage space and determine a model selection mode for designating a different model selection method according to the read values.

In some example embodiments, when the model selection mode is the first model selection mode, the model selection module 140 may select the PLS model as the machine learning model to be used for predicting the dart impact strength of the multilayer film. As described above, the features set by the feature setting module 130 according to the feature setting mode may be combined in a form such as a single vector and may be used as input to the PLS model. The dart impact strength of the multilayer film is set as the target variable, and the learning module 150 may train the PLS model in a direction that maximizes the correlation between the input feature and the target variable. In this case, the learning module 150 optimizes a "n_components" parameter so that the PLS model may properly describe data, and an optimal "n_components" value may be determined through cross-validation. Through the PLS model trained in this way, the dart impact strength of the multilayer film may be predicted by inputting features for a new single layer film.

In some other example embodiments, when the model selection mode is the second model selection mode, the model selection module 140 may select the Lasso regression model as the machine learning model to be used to predict the dart impact strength of the multilayer film. As described above, the features set by the feature setting module 130 according to the feature setting mode may be combined in a form such as a single vector and may be used as input to the Lasso regression model. The dart impact strength of the multilayer film is set as the target variable, and the learning module 150 may train the Lasso regression model in the direction that induces the model to select only important features through L1 regularization (regularization that adds the sum of the absolute values of the regression coefficients to the objective function as a penalty). In this case, the learning module 150 optimizes an "alpha" parameter for adjusting the regularization strength during the model training, and the optimal "alpha" value may be determined through the cross-validation. Through the Lasso regression model trained in this way, the dart impact strength of the multilayer film may be predicted by inputting features for a new single layer film.

In some other example embodiments, when the model selection mode is the third model selection mode, the model selection module 140 may select the random forest model as the machine learning model to be used to predict the dart impact strength of the multilayer film. As described above, the features set by the feature setting module 130 according to the feature setting mode may be combined in a form such as a single vector and used as an input for the random forest model. The dart impact strength of the multilayer film is set as the target variable, and the learning module 150 may be trained by setting "n_estimators", "max_depth", "min_samples_split", etc., as hyperparameters of the random forest model. Through the random forest model trained in this way, the dart impact strength of the multilayer film may be predicted by inputting the features for a new single layer film.

The design data generation module 162 may generate design data for the multilayer film by combining predicted values for other characteristics with predicted values of the dart impact strength acquired through the prediction module 160 to meet the design requirements of the multilayer film. In some example embodiments, other characteristics may include at least one of stiffness, strength, strain, tear strength, high-speed dart impact strength, sealing initiation temperature (SIT), haze, moisture permeability, and air permeability for the multilayer film.

The design data generation module 162 may first combine the predicted values for at least one of the stiffness, the strength, strain, the tear strength, the high-speed dart impact strength, the sealing initiation temperature, the haze, the moisture permeability, and the air permeability for the multilayer film with the predicted values of the dart impact strength. The design requirements for the multilayer film to be designed may include requirements for ensuring mechanical properties, thermal properties, optical properties, barrier properties, and chemical properties to secure desired performance. When the multilayer film designed based on the first combination of predicted values satisfies the design requirements, the design data generation module 162 may generate the design data based on the first combination. In this case, the design data may include specific predicted values.

In contrast, when the multilayer film designed based on the first combination of the predicted values does not satisfy the design requirements, the design data generation module 162 may redesign the multilayer film by changing the first combination to a different combination. That is, the design data generation module 162 may secondarily combine the predicted value of at least one of the stiffness, the strength, the strain, the tear strength, the high-speed dart impact strength, the sealing initiation temperature, the haze, the moisture permeability, and the air permeability of the multilayer film with the predicted value of the dart impact strength so that the combination is different from the first combination. In this case, the predicted value of the dart impact strength in the first combination and the predicted value of the dart impact strength in the second combination may be different values.

When the multilayer film designed based on the second combination of the predicted values satisfies the design requirements, the design data generation module 162 may generate the design data based on the second combination. In contrast, when the multilayer film designed based on the second combination of the predicted values also does not satisfy the design requirements, the design data generation module 162 may change the second combination to another combination and repeat the process of redesigning the multilayer film.

According to the present example embodiment, when designing the multilayer film, the properties of the multilayer film may be predicted using only information about the single layer film forming the multilayer film. In particular, by performing learning and prediction using various indicators of the dart impact strength stress-strain data for the single layer film and the thickness of the single layer film as the features, the dart impact strength of the multilayer film may be predicted with high accuracy. In addition, by varying the number of indicators selected as the features when the performance is prioritized and the number of indicators selected as the features when computing resources are saved, the flexible design is possible according to the implementation purpose and the environment of the design apparatus for the multilayer film. Furthermore, by considering the prediction results regarding other properties of the multilayer film together with the prediction results of the dart impact strength, the multilayer film that may satisfy given design requirements may be designed.

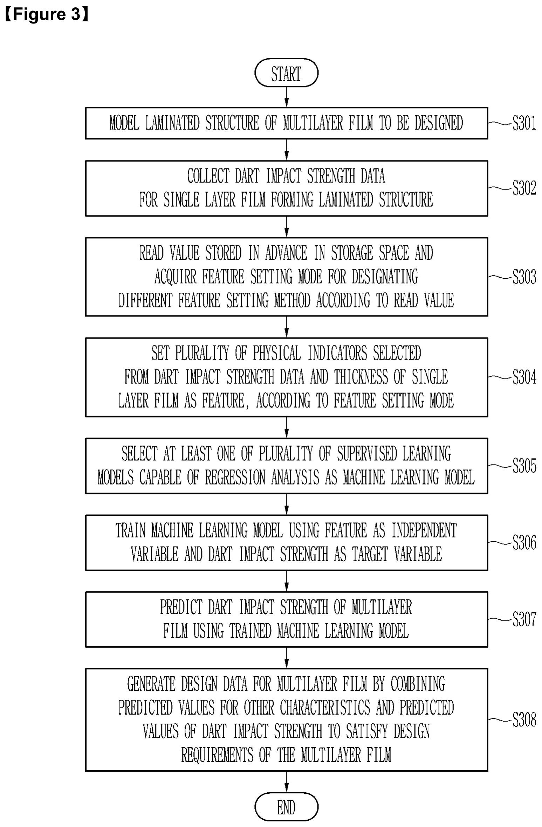

FIG. 3 is a flowchart illustrating a design method for a multilayer film according to an example embodiment.

Referring to FIG. 3, a design method for the multilayer film according to an example embodiment includes modeling the laminated structure of the multilayer film to be designed (S301), collecting dart impact strength data for the single layer film forming the laminated structure (S302), reading a value stored in advance in a storage space and acquiring a feature setting mode for designating a different feature setting method according to the read value (S303), setting a plurality of physical indicators selected from the dart impact strength data and a thickness of the single layer film as a feature, according to the feature setting mode (S304), selecting at least one of a plurality of supervised learning models capable of regression analysis as a machine learning model (S305), training the machine learning model using the feature as an independent variable and the dart impact strength as a target variable (S306), predicting the dart impact strength of the multilayer film using the trained machine learning model (S307), and generating design data for the multilayer film by combining predicted values for other characteristics and predicted values of the dart impact strength to satisfy design requirements of the multilayer film (S308).

For more specific details regarding the design method for the multilayer film, reference may be made to and application of the descriptions of the example embodiments described in this specification, and therefore, redundant descriptions thereof will be omitted herein.

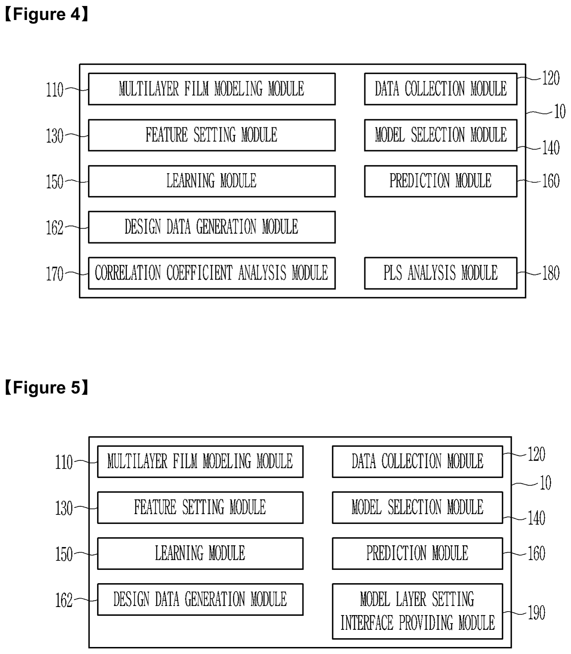

FIG. 4 is a block diagram illustrating the design apparatus for a multilayer film according to an example embodiment.

Referring to FIG. 4, the design apparatus 10 of a multilayer film according to an example embodiment may include all or at least a part of the multilayer film modeling module 110, the data collection module 120, the feature setting module 130, the model selection module 140, the learning module 150, the prediction module 160, the design data generation module 162, the correlation coefficient analysis module 170, and the PLS analysis module 180. For example, the learning module 150 may be implemented within the design apparatus 10 of a multilayer film. In contrast, for example, the learning module 150 may be implemented outside of the design apparatus 10 of a multilayer film, and the design apparatus 10 of a multilayer film may be provided with a machine learning model trained by the learning module 150. For the multilayer film modeling module 110, the data collection module 120, the feature setting module 130, the model selection module 140, the learning module 150, the prediction module 160, and the design data generation module 162, unless they are contradictory or inconsistent with what is described in the present example embodiment, the description of the multilayer film modeling module 110, the data collection module 120, the feature setting module 130, the model selection module 140, the learning module 150, the prediction module 160, and the design data generation module 162 described above with reference to FIGS. 1 and 2 may be referenced, and therefore, redundant descriptions thereof will be omitted herein.

The correlation coefficient analysis module 170 may analyze the correlation coefficient between mechanical properties in the stress-strain data, and the PLS analysis module 180 may predict the dart impact strength value of the multilayer film using the PLS analysis according to the correlation coefficient analyzed by the correlation coefficient analysis module 170. The PLS analysis may be used to model the relationship between the plurality of independent variables and the plurality of dependent variables (or target variables), and may find the independent variables that are determined to be important in predicting the dependent variables. Specifically, the correlation coefficient analysis module 170 may construct the independent variables and the dependent variables from various indicators of the dart impact strength stress-strain data for the single layer film, and find the component with the largest covariance. From this, a new subspace is generated, in which the relationship between the independent variables and the dependent variables may be most greatly expressed. The PLS analysis module 180 may find new components by repeatedly adjusting variables in proportion to each covariance for the new subspace until the desired number of components are extracted. In this way, the properties of the multilayer film may be predicted together with or instead of the prediction module 160.

In some example embodiments, the correlation coefficient analysis module 170 may be implemented to be logically separated from the feature setting module 130, or may be implemented to be logically included in the feature setting module 130. In the case where the correlation coefficient analysis module 170 is implemented to be logically included in the feature setting module 130, when setting the plurality of physical indicators selected from the dart impact strength data for the single layer film and the thickness of the single layer film as the features, the correlation coefficient between the mechanical properties of the stress-strain data may be analyzed as a preprocessing for data dimensionality reduction.

Meanwhile, in some example embodiments, the PLS analysis module 180 may be implemented to be logically separated from the model selection module 140, or may be implemented to be logically included in the model selection module 140. In the case where the PLS analysis module 180 is implemented to be logically included in the model selection module 140, when selecting the machine learning model to be used for predicting the dart impact strength, the model performing the PLS analysis may be selected.

According to the present example embodiment, by performing the separate analysis on the indicators having high collinearity among various indicators of the dart impact strength stress-strain data for the single layer film, the accuracy of predicting the dart impact strength of the multilayer film may be further improved.

FIG. 5 is a block diagram illustrating the design apparatus for a multilayer film according to an example embodiment.

Referring to FIG. 5, the design apparatus 10 of a multilayer film may include all or at least a part of the multilayer film modeling module 110, the data collection module 120, the feature setting module 130, the model selection module 140, the learning module 150, the prediction module 160, the design data generation module 162, and a model layer setting interface providing module 190. For example, the learning module 150 may be implemented within the design apparatus 10 of a multilayer film. In contrast, for example, the learning module 150 may be implemented outside of the design apparatus 10 of a multilayer film, and the design apparatus 10 of a multilayer film may be provided with a machine learning model trained by the learning module 150. For the multilayer film modeling module 110, the data collection module 120, the feature setting module 130, the model selection module 140, the learning module 150, the prediction module 160, and the design data generation module 162, unless they are contradictory or inconsistent with what is described in the present example embodiment, the description of the multilayer film modeling module 110, the data collection module 120, the feature setting module 130, the model selection module 140, the learning module 150, the prediction module 160, and the design data generation module 162 described above with reference to FIGS. 1 and 2 may be referenced, and therefore, redundant descriptions thereof will be omitted herein.

The multilayer film modeled in the multilayer film modeling module 110 may be modeled as the multilayer film model. Here, the multilayer film model may be in the form of including a plurality of empty slots that are sequentially arranged in the vertical direction. Specifically, the multilayer film model may include n slots (n is a multiple of 6) that are stacked on each other, i.e., model layers. In addition, when the multilayer film includes a first single layer film and a second single layer film that are laminated on each other, the first single layer film may correspond to two or more model layers among the model layers, and the second single layer film may correspond to two or more other model layers among the model layers. The data collection module 120 may collect the dart impact strength data for the first single layer film and the second single layer film based on the multilayer film model.

The model layer setting interface providing module 190 may enable a user to set the model layers. To this end, the model layer setting interface providing module 190 may provide a user interface that displays the model layer on a display device and allows a user to set the model layer corresponding to the first single layer film and the model layer corresponding to the second single layer film.

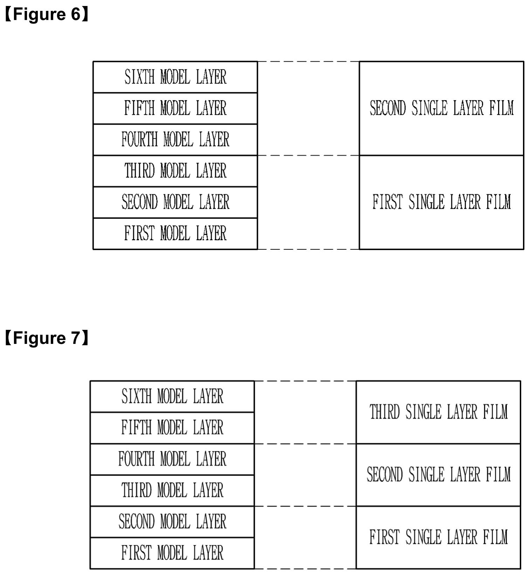

FIGS. 6 and 7 are diagrams illustrating the user interface according to an example embodiment.

Referring to FIG. 6, the model layer setting interface providing module 190 may present the first model layer to the sixth model layer, which are expressed as n (n is a multiple of 6) slots that are stacked on each other, to the user through the display device. The user may input, through the user interface, information about how many model layers one single layer film occupies, the stacking order between the single layer films, and the type and unique properties of the single layer film set to which model layer. For example, as illustrated in the drawings, the user may input the information that, by assigning the first single layer film to the first model layer to the third model layer and the second single layer film to the fourth model layer to the sixth model layer, the first single layer film and the second single layer film each occupy three model layers, and that the second single layer film is laminated on the first single layer film. Although not illustrated, the user may input the types and other special features of each of the first single layer film and the second single layer film.

Referring next to FIG. 7, the user may input information that, by assigning the first single layer film to the first model layer to the second model layer, the second single layer film to the third model layer to the fourth model layer, and the third single layer film to the fifth model layer to the sixth model layer, each of the first single layer film to the third single layer film occupies two model layers, the second single layer film is laminated on the first single layer film, and the third single layer film is laminated on the second single layer film. Although not illustrated, the user may input the types and other special features of each of the first single layer film to the third single layer film.

According to the present example embodiment, the feature setting module 130 may set features based on the same 6-layer model layer structure, for example, in the case where the types of single layer films forming the multilayer film are 2 types and 3 types. Accordingly, the learning module 150 may train the machine learning model 20 by using the features for the same number of model layer structures as the independent variables and the dart impact strength of the multilayer film as the target variable, regardless of the number of types of single layer films forming the multilayer film. Accordingly, since the machine learning model 20 may be applied regardless of the number of types of single layer films forming the multilayer film, it is possible to reduce implementation the complexity and computational cost while maintaining high prediction accuracy compared to the case where different layer structures should be trained for each type of the single layer film forming the multilayer film.

FIG. 8 is a diagram for describing a computing device according to an example embodiment.

Referring to FIG. 8, the design apparatus and method for a multilayer film according to the example embodiments may be implemented using the computing device 50. The computing device 50 may be implemented as various types of electronic devices, servers, or similar devices, and its functions may be implemented through a combination of software and hardware.

The computing device 50 may include at least one of a processor 510, a memory 530, a user interface input device 540, a user interface output device 550, and a storage device 560 that communicate via a bus 520. The computing device 50 may also include a network interface 570 that is electrically connected to a network 40. The network interface 570 may transmit or receive signals to or from other entities via the network 40.

The processor 510 may be implemented as various types of computational units, such as a micro controller unit (MCU), an application processor (AP), a central processing unit (CPU), a graphic processing unit (GPU), a neural processing unit (NPU), and a quantum processing unit (QPU). The processor 510 is a semiconductor device that executes instructions stored in the memory 530 or the storage device 560, and may play a key role in the system. The program code and data stored in the memory 530 or the storage device 560 instruct the processor 510 to perform specific tasks, thereby enabling the overall operation of the system. The processor 510 may be configured to implement various functions and methods described above with respect to FIGS. 1 to 7 through this.

The memory 530 and the storage device 560 may include various forms of volatile or nonvolatile storage media for storing and accessing data of the system. For example, the memory 530 may include a read only memory (ROM) 531 and a random access memory (RAM) 532. In some example embodiments, the memory 530 may be embedded within the processor 510, in which case the data transfer speed between the memory 530 and the processor 510 may be very fast. In some other example embodiments, the memory 530 may be located externally to the processor 510, in which case the memory 530 may be connected to the processor 510 via various data buses or interfaces. Such connection may be made via various means known in the art, for example, a peripheral component interconnect express (PCle) interface for high-speed data transfer or a memory controller.

In some example embodiments, at least some of the components or functions of the design apparatus and method for the multilayer film according to the example embodiments may be implemented as a program or software that runs on the computing device 50, and the program or software may be stored on a computer-readable medium. Specifically, a computer-readable medium according to an example embodiment may record a program for causing a computer including the processor 510 to execute a program or instructions stored in the memory 530 or the storage device 560 to execute steps included in the design method for a multilayer film according to the example embodiments.

In some example embodiments, at least some of the configurations or functions of the design apparatus and method for the multilayer film according to the example embodiments may be implemented using hardware or circuitry of the computing device 50, or may be implemented as separate hardware or circuitry that may be electrically connected to the computing device 50.

According to the example embodiment, when designing the multilayer film, the properties of the multilayer film may be predicted using only information about the single layer film forming the multilayer film. In particular, by performing learning and prediction using various indicators of the dart impact strength stress-strain data for the single layer film and the thickness of the single layer film as the features, the dart impact strength of the multilayer film may be predicted with high accuracy. In addition, by varying the number of indicators selected as the features when the performance is prioritized and the number of indicators selected as the features when computing resources are saved, the flexible design is possible according to the implementation purpose and the environment of the design apparatus for the multilayer film. Furthermore, by considering the prediction results regarding other properties of the multilayer film together with the prediction results of the dart impact strength, the multilayer film that may satisfy given design requirements may be designed.

Although embodiments of the present disclosure have been described in detail hereinabove, the scope of the present disclosure is not limited thereto, but may include several modifications and alterations made by those skilled in the art to which the present disclosure pertains using a basic concept of the present disclosure as defined in the claims.

## Claims

1. A design apparatus for a multilayer film that designs the multilayer film based on properties of the multilayer film predicted only using information about a single layer film by executing a program code loaded into one or more memory devices through one or more processors,
wherein the program code is executed to:
model the laminated structure of the multilayer film to be designed;
collect dart impact strength data for the single layer film forming the laminated structure as stress-strain data;
read a value stored in advance in a storage space accessible to the design apparatus for the multilayer film, and acquire a feature setting mode for designating different feature setting methods according to the read value;
set a plurality of physical indicators selected from the dart impact strength data and a thickness of the single layer film as a feature, according to the feature setting mode;
select at least one of a plurality of supervised learning models capable of regression analysis as a machine learning model;
predict the dart impact strength of the multilayer film using the machine learning model trained using the features as an independent variable and the dart impact strength of the multilayer film as a target variable; and
generate design data for the multilayer film by combining predicted values for other characteristics and predicted values of the dart impact strength to satisfy design requirements of the multilayer film.

2. The design apparatus of claim 1, wherein:
when the feature setting mode includes a first feature setting mode, the setting as the feature includes
setting, as the feature, at least some of a yield point, yield stress, resilience, strain hardening, failure, strain hardening modulus, flow energy, strain hardening energy, toughness, 1% modulus, and 2% modulus, and a thickness of the single layer film.

3. The design apparatus of claim 2, wherein:
the selecting as the machine learning model includes
selecting one of a partial least squares (PLS) model, a Lasso regression model, and a random forest model as the machine learning model, and
the machine learning model selected from among the PLS model, the Lasso regression model, and the random forest model
receives a vector generated from at least some of the yield point, the yield stress, the resilience, the strain hardening, the failure, the strain hardening modulus, the flow energy, the strain hardening energy, the toughness, the 1% modulus, and the 2% modulus, and the thickness of the single layer film, and is trained to predict the dart impact strength of the multilayer film.

4. The design apparatus of claim 1, wherein:
when the feature setting mode includes a second feature setting mode, the setting as the feature includes
setting, as the feature, at least some of yield stress, yield strain, necking stress, necking strain, breaking stress, and breaking strain, and the thickness of the single layer film.

5. The design apparatus of claim 4, wherein:
the selecting as the machine learning model includes
selecting one of a PLS model, a Lasso regression model, and a random forest model as the machine learning model, and
the machine learning model selected from among the PLS model, the Lasso regression model, and the random forest model
receives a vector generated from at least some of the yield stress, the yield strain, the necking stress, the necking strain, the breaking stress, and the breaking strain, and the thickness of the single layer film, and is trained to predict the dart impact strength of the multilayer film.

6. The design apparatus of claim 1, wherein:
when the feature setting mode includes a third feature setting mode, the setting as the feature includes
setting, as the feature, indicators of yield stress, yield strain, and the yield stress being divided by the yield strain, and the thickness of the single layer film.

7. The design apparatus of claim 6, wherein:
the selecting as the machine learning model includes
selecting one of a PLS model, a Lasso regression model, and a random forest model as the machine learning model, and
the machine learning model selected from among the PLS model, the Lasso regression model, and the random forest model
receives a vector generated from the indicators of the yield stress, the yield strain, and the yield stress being divided by the yield strain, and the thickness of the single layer film, and is trained to predict the dart impact strength of the multilayer film.

8. The design apparatus of claim 1, wherein:
the generating of the design data for the multilayer film includes
combining predicted values for at least one of stiffness, strength, strain, tear strength, high-speed dart impact strength, sealing initiation temperature (SIT), haze, moisture permeability, and air permeability of the multilayer film with the predicted values of the dart impact strength,
when the multilayer film designed based on the combination of the predicted values satisfies the design requirements, generating the design data based on the combination, and
when the multilayer film designed based on the combination of the predicted values does not satisfy the design requirements, changing the combination to another combination and redesigning the multilayer film.

9. The design apparatus of claim 1, wherein:
the multilayer film is modeled as a multilayer film model,
the multilayer film includes a first single layer film and a second single layer film that are laminated to each other,
the multilayer film model includes n (n is a multiple of 6) model layers that are laminated to each other, and
the first single layer film corresponds to two or more model layers among the model layers, and the second single layer film corresponds to two or more other model layers among the model layers.

10. The design apparatus of claim 9, wherein:
the program code is executed to further:
display the model layer on a display device, and provide a user interface that allows a user to set the model layer corresponding to the first single layer film and the model layer corresponding to the second single layer film.

11. A design method for a multilayer film that designs the multilayer film based on properties of the multilayer film predicted only using information about a single layer film performed by a computing device including one or more processors and one or more memory devices, the design method comprising:
modeling the laminated structure of the multilayer film to be designed;
collecting dart impact strength data for the single layer film forming the laminated structure as stress-strain data;
reading a value stored in advance in a storage space accessible by the computing device and acquiring a feature setting mode for designating a different feature setting method according to the read value;
setting a plurality of physical indicators selected from the dart impact strength data and a thickness of the single layer film as a feature, according to the feature setting mode;
selecting at least one of a plurality of supervised learning models capable of regression analysis as a machine learning model;
predicting the dart impact strength of the multilayer film using the machine learning model trained using the feature as an independent variable and the dart impact strength of the multilayer film as a target variable; and
generating design data for the multilayer film by combining predicted values for other characteristics and predicted values of the dart impact strength to satisfy design requirements of the multilayer film.

12. The design method of claim 11, wherein:
when the feature setting mode includes a first feature setting mode, the setting as the feature includes
setting, as the feature, at least some of a yield point, yield stress, resilience, strain hardening, failure, strain hardening modulus, flow energy, strain hardening energy, toughness, 1% modulus, and 2% modulus, and a thickness of the single layer film.

13. The design method of claim 12, wherein:
the selecting as the machine learning model includes
selecting one of a PLS model, a Lasso regression model, and the random forest model as a machine learning model, and
the machine learning model selected from among the PLS model, the Lasso regression model, and the random forest model
receives a vector generated from at least some of the yield point, the yield stress, the resilience, the strain hardening, the failure, the strain hardening modulus, the flow energy, the strain hardening energy, the toughness, the 1% modulus, and the 2% modulus, and the thickness of the single layer film, and is trained to predict the dart impact strength of the multilayer film.

14. The design method of claim 11, wherein:
when the feature setting mode includes a second feature setting mode, the setting as the feature includes
setting, as the feature, at least some of yield stress, yield strain, necking stress, necking strain, breaking stress, and breaking strain, and the thickness of the single layer film.

15. The design method of claim 14, wherein:
the selecting as the machine learning model includes
selecting one of a PLS model, a Lasso regression model, and a random forest model as the machine learning model, and
the machine learning model selected from among the PLS model, the Lasso regression model, and the random forest model
receives a vector generated from at least some of the yield stress, the yield strain, the necking stress, the necking strain, the breaking stress, and the breaking strain, and the thickness of the single layer film, and is trained to predict the dart impact strength of the multilayer film.

16. The design method of claim 11, wherein:
when the feature setting mode includes a third feature setting mode, the setting as the feature includes
setting, as the feature, indicators of yield stress, yield strain, and the yield stress being divided by the yield strain, and the thickness of the single layer film.

17. The design method of claim 16, wherein:
the selecting as the machine learning model includes
selecting one of a PLS model, a Lasso regression model, and a random forest model as the machine learning model, and
the machine learning model selected from among the PLS model, the Lasso regression model, and the random forest model
receives a vector generated from the indicators of the yield stress, the yield strain, and the yield stress being divided by the yield strain, and the thickness of the single layer film, and is trained to predict the dart impact strength of the multilayer film.

18. The design method of claim 11, wherein:
the generating of the design data for the multilayer film includes:
combining predicted values for at least one of stiffness, strength, strain, tear strength, high-speed dart impact strength, sealing initiation temperature (SIT), haze, moisture permeability, and air permeability of the multilayer film with the predicted values of the dart impact strength;
when the multilayer film designed based on the combination of the predicted values satisfies the design requirements, generating the design data based on the combination; and
when the multilayer film designed based on the combination of the predicted values does not satisfy the design requirements, changing the combination to another combination and redesigning the multilayer film.

19. The design method of claim 11, wherein:
the multilayer film is modeled as a multilayer film model,
the multilayer film includes a first single layer film and a second single layer film that are laminated to each other,
the multilayer film model includes n (n is a multiple of 6) model layers that are laminated to each other, and
the first single layer film corresponds to two or more model layers among the model layers, and the second single layer film corresponds to two or more other model layers among the model layers.

20. The design method of claim 19, further comprising:
displaying the model layer on a display device, and providing a user interface that allows a user to set the model layer corresponding to the first single layer film and the model layer corresponding to the second single layer film.
